(19) Europäisches Patentamt
European Patent Office
Office européen des brevets

(11) Publication number: 0 194 062 A2

(12) **EUROPEAN PATENT APPLICATION**

(21) Application number: 86301031.0

(22) Date of filing: 14.02.86

(51) Int. Cl.[4]: C08G 65/40 , C08L 71/00

(30) Priority: 05.03.85 GB 8505682

(43) Date of publication of application: 10.09.86 Bulletin 86/37

(84) Designated Contracting States: AT BE CH DE FR GB IT LI LU NL SE

(71) Applicant: IMPERIAL CHEMICAL INDUSTRIES PLC
Imperial Chemical House Millbank
London SW1P 3JF(GB)

(72) Inventor: Rose, John Brewster
8, Hillier Road
Guilford Surrey GU1 2JQ(GB)
Inventor: Nield, Eric
3 Dell Lees Seer Green
Beaconsfield Bucks HP9 2UJ(GB)
Inventor: McGrail, Patrick Terence
White Hall Farm Mickleby
Saltburn Cleveland TS15 5LX(GB)
Inventor: Colquhoun, Howard Matthew
8 Grove Park
Knutsford Cheshire WA16 8QA(GB)

(74) Representative: James, David Gomer et al
Imperial Chemical Industries PLC Legal
Department: Patents Po Box 6 Bessemer Road
Welwyn Garden City Herts, AL7 1HD(GB)

(54) **Polyarylether.**

(57) A polyarylether includes repeating units of the structure

IA. -Ph -CO -Ar' -CO -Ph -and of the structure

IB. $-Ar^2$ -

wherein IA and IB are linked through ether linkages, Ph is phenylene, Ar' is a polyaromatic group such as biphenylene and $Ar^2$ may be Ph or a polyaromatic group wherein two aromatic groups may be linked by -CO -or $-SO_2$ -and at least some of the groups $Ar^2$ contain $-SO_2$ -. In preferred polymers, at least some of the structures IA are joined to each other or to an $Ar^2$ group which does not contain $-SO_2$-. The polymers typically have a glass transition temperature of $\geq$ 200°C and a melting temperature of $\geq$ 300°C and preferably $\leq$ 430°C. Polymers of this type have enhanced solvent resistance, even when essentially amorphous.

EP 0 194 062 A2

The present invention relates to polyarylethers and in particular to such polymers which include ketone and sulphone linkages between some of the aromatic rings.

Polyarylethers containing sulphone linkages between some of the aromatic rings have been known for many years and are described, for example, in British Patent Specifications 1016245 and 1078234. Commercially available polymers of this type have glass transition temperatures which are typically in excess of 150°C and which may be in excess of 200°C. However, whilst these materials have good high temperature properties, as indicated by their relatively high glass transition temperatures, a few are at best only poorly crystallisable but most of these polymers can be obtained only in the amorphous state on melt processing. Hence, whilst the properties of such polymers are useful in many demanding applications, the polymers have poor solvent resistance, both at ambient temperature and at elevated temperatures.

Polyarylethers containing ketone linkages between some of the carbon atoms are described in British Patent Specification 971227 inter alia. Such polymers are generally crystalline and, in the crystalline form, are resistant to a wide range of environments. Polymers of this type generally have a crystalline melting point which is in excess of 300°C and may be excess of 400°C. However, the glass transition temperature of these polymers is much lower and is frequently below 200°C and may be below 160°C. Thus, whilst such polymers have high melting points, they lose a substantial fraction of their mechanical properties at the glass transition temperature. Hence, whilst polyethersulphones and polyetherketones have properties which make them useful for many high temperature applications, the properties are not ideal for some more demanding applications where retention of good mechanical properties to temperatures of 180°C or higher are desired, together with good solvent resistance.

According to the present invention there is provided a polyarylether which contains repeating units of the structure

IA. -Ph -CO -$Ar^1$ -CO - Ph -,

together with the units of the structure

IB. - $Ar^2$ -

wherein IA and IB are linked through ether linkages;

Ph is a phenylene group, preferably a para-pheylene group;

$Ar^1$ is a polyaromatic group containing at least two aromatic groups directly linked together; and

$Ar^2$ is a group Ph or is a polyaromatic group containing at least two aromatic groups which are either directly linked together or are linked together by -CO -or -$SO_2$ -groups, wherein at least some of the groups $Ar^2$ contain a group -$SO_2$ -.

In the polyarylether, the structures IA and IB may be linked to themselves, or to each other, through ether linkages.

By "directly linked together" we mean that the aromatic groups are linked together by a direct link between the rings, as in biphenylene or terphenylene or are linked together in a fused ring system, as in naphthalene. Thus, the groups $Ar^1$ and $Ar^2$ may be 4,4'-biphenylene; 4,4"-p-terphenylene or 2,6-naphthylene. Alternatively, the group $Ar^2$ can be para-phenylene, 4,4'-diphenylene sulphone, 4,4'-diphenyleneketone, 1,4-bis(4-benzoyl) benzene or 4,4'-bis(4-phenylsulphonyl) biphenyl. At least some of the groups $Ar^2$ are groups which contain a group -$SO_2$ -, that is a sulphone group.

Preferred polymers in accordance with the present invention contain at least 10 mole % of each of the structures IA and IB and particularly contain at least 25 mole % of each of the structures IA and IB. Especially preferred polymers in accordance with the present invention contain 50 mole % of the structure IA and 50 mole % of the structure IB.

The group $Ar^1$ is conveniently a 4,4'-biphenylene group. At least some of the groups $Ar^2$ are conveniently 4,4'-diphenylene sulphone groups.

The repeating units of the structures IA and IB may be the only repeating units present in the polyarylether but other repeating units may also be present in the polymer. If other repeating units are present in the polymer, the structures IA and IB may be linked through ether linkages to themselves, to each other, to the other repeating units or there may be a combination of all of these linkages. If the polyarylether contains only the structures IA and IB the polymer resulting contains repeating units of the structure

IC. -Ph -CO -$Ar^1$ -CO -Ph -O -$Ar^2$ -.

and may also contain repeating units of the structure

ID. -Ph -CO -$Ar^1$ -CO -Ph -O -Ph -CO -$Ar^1$ -CO -Ph -

and

IE. -$Ar^2$ -O -$Ar^2$ -

wherein the groups IC, ID and IE are linked through ether linkages.

In one polyether in accordance with the present invention, $Ar^1$ is a 4,4'-biphenylene group and at least some of the groups $Ar^2$ are 4,4'-diphenylene sulphone groups. Such a polymer contains repeating units of the structure

IIA. -Ph -CO -Ph -Ph -CO -Ph -

and

IIB. -Ph -$SO_2$ -Ph -

alone or together with other repeating units, and linked through ether linkages.

Other repeating units which may be present in the polyether, in addition to the repeating units IIA and IIB, include, inter alia repeating units of the structure

III. -Ph -,

IV. -Ph -Ph -and/or

V. -Ph -CO -Ph -

wherein the units IIA and IIB, together with one or more of the units III, IV and/or V are linked together through ether linkages to give a mixture of repeating units correspond to IC, ID and IE.

Alternative polymers in accordance with the present invention are those in which the structure IA is of the type

ID. - Ph -CO -Ph -Ph -CO -Ph -

and the structure IB is of the type

IE. -Ph $-SO_2$ -Ph -Ph $-SO_2$ -Ph -or

IF. -Ph $-SO_2$ -Ph -;

and the polymer also includes repeating units of the structure

VI. -Ph -Ph -

the repeating units being linked through ether linkages.

Further polymers in accordance with the present invention can include the structures ID, IF, VI and

VII. -Ph -CO -Ph - ,

the repeating units being linked through ether linkages.

It is preferred that at least 10% of the groups $Ar^2$ contain a group $-SO_2$ -and it is particularly preferred that at least 25% of the groups $Ar^2$ contain a group $-SO_2$ -. It is generally preferred that not more than 80% of the groups $Ar^2$ contain a group $-SO_2$ -since we have found that with a higher proportion of the groups $-SO_2$ -the polymer is generally of low crystallinity and even this level of crystallinity is obtained only by slow cooling. It is especially preferred that 30 to 70% of the groups $Ar^2$ contain a group $-SO_2$ -.

Polymers in accordance with the present invention generally have a molecular weight which is such that the melt viscosity of the polymer is at least $0.01kNsm^{-2}$, and preferably is at least $0.1kNsm^{-2}$. It is generally preferred that the polymer has a melt viscosity of not more than $4kNsm^{-2}$ and especially not more than $2.0kNsm^{-2}$. The melt viscosity of the polymer is measured using a ram extruder fitted with a 3.175 mm x 0.5 mm die operating at a shear rate of $1000s^{-1}$. The temperature at which melt viscosity is determined is dependent on the melting temperature of the polymer and is typically 400°C for polymers having a melting temperature of up to about 370°C. For polymers having a higher melting temperature, the melt viscosity is preferably measured at a temperature which is at least 30°C above the melting temperature of the polymer. Alternatively, an indication of the molecular weight can be obtained from a determination of the reduced viscosity of a solution of one gramme of polymer in 100 $cm^3$ of concentrated sulphuric acid. Preferred polymers have a reduced viscosity in the range 0.2 up to 3.0, especially 0.8 to 1.5.

Polymers in accordance with the present invention can be at least partially crystallisable even when all of the groups $Ar^2$ contain $-SO_2$ -groups. In the crystalline form the polymers have solvent resistance. We have found that the proportion of crystallinity is dependent not only on the nature of the structures IA and IB and the proportions thereof but also on the arrangement of the structures IA and IB. Thus, in a polymer containing only the structures IIA and IIB, wherein IIA and IIB are in equimolar proportions, the percentage crystallinity, as estimated by differential scanning calorimetry (DSC) by measuring the area of the melting peek, may vary from essentially nil to about 13%. We have found that the percentage crystallinity is dependent on the presence of structures IIA linked together through ether linkages to give units of the structure

IIC. -Ph -CO -Ph -Ph-CO-Ph -O -Ph -CO -Ph -Ph - CO - Ph -

If the polymer structure consists essentially of alternating structures IIA and IIB, the percentage crystallinity of the polymer is essentially zero. As the proportion of the structure IIA which are linked together through ether linkages increases, the percentage crystallinity increases to a maximum of about 13%. Similar effects are observed in other polymers which contain a smaller molar proportion of the groups $Ar^2$ which contain a group $-SO_2$ -. However, the polymers containing a smaller molar proportion of the groups $Ar^2$ containing a group $-SO_2$-are generally more crystalline than corresponding polymers in which all of the groups $Ar^2$ contain a sulphone group. In polymers of this type, crystallinity is dependent on the presence of structures IA linked to each other or structures IA linked to groups $Ar^2$ which do not contain a sulphone group. In many polymers in accordance with the invention, the arrangement of the structures IA and IB in the polymer chain can be deduced from the carbon -13 Nuclear Magnetic Resonance - (hereafter simply "NMR") spectrum of the polymer.

Polymers in accordance with the present invention typically have a glass transition temperature of at least 180°C, and particularly of at least 200°C. Such polymers typically show good retention of mechanical properties at temperatures of up to at least 180°C or higher. The polymers are generally crystallisable and have a melting point which is typically at least 300°C and may be in excess of 400°C. Although the polymers of the invention have good high temperature properties, they are susceptible to deterioration at temperatures in excess of about 400°C, particularly when being melt processed at such temperatures. Hence, we generally prefer polymers having a melting point of not more than about 430°C, and particularly of not more than about 400°C, in order to avoid prolonged exposure to temperatures of substantially above 400°C when processing the polymers.

We have found that polymers containing 50 mole % of structure IA and 50 mole % of structure IB, wherein all of the groups $Ar^2$ contain $-SO_2$ -groups crystallise only slowly from the melt and tend to have a low degree of crystallinity. Whilst these polymers of low crystallinity have good solvent resistance, we prefer that the polymers are more crystalline and hence we prefer that not all of the groups $Ar^2$ contain $-SO_2$ -groups and it is generally preferred that not more than 80% of the groups $Ar^2$ contain a group $-SO_2$ -.

Polymers in accordance with the present invention can be melt processed into shaped articles, including films, fibres and insulating coatings on electrical conductors. The polymers can be used in those applications for which polyethersulphones have been proposed previously and in particular may be used for bearings or bearing liners or for those applications which require a combination of one or more of good electrical insulating properties, good resistance to a wide range of chemicals, retention of mechanical properties up to high temperature and good resistance to burning coupled with the emission of low proportions of toxic fumes and with low smoke density.

Whilst for many applications the polymers of the present invention may be used with few if any additives, other than stabilisers, other materials may be incorporated into the polymers to produce a range of polymer compositions.

Thus, as a further aspect of the present invention there is provided a polymer composition comprising a polymer as hereinbefore described together with at least one additive.

The at least one additive which is present in the polymer may be any additive, or combination of additives, which has previously been proposed for inclusion in polyarylethers containing sulphone and/or ketone linkages between some of the aromatic rings. Such additives include for example, other polymeric materials such as polyethersulphones or polyetherketones, inorganic and organic fibrous fillers such as glass fibre, carbon fibre and poly-paraphenylene terephthalamide fibre; organic and inorganic fillers such polytetrafluorethylene, graphite, boron nitride, mica, talc and vermiculite; nucleating agents; and stabilisers such as phosphates and combinations thereof. As discussed in more detail hereafter, the polymer may also include a nucleophilic reaent.

It is preferred that the total proportion of other components, when present, is at least 0.1%, and does not exceed 80%, by weight of the total composition and especially that the proportion of other components does not exceed 70% by weight. The composition containing other components can contain, for example 5 to 30% by weight of boron nitride; or at least 20% by weight of short glass or carbon fibre; or 50 to 70%, especially about 60%, by volume of continuous glass or carbon fibre; or a mixture of a fluorine-containing polymer, graphite and an organic or inorganic fibrous filler wherein the total proportion of these additives is preferably at least 20%, and not more than 50%, by weight of the total composition.

The polymer composition may be made by admixture of the polymer of the present invention with the additional component or components in a suitable mixing machine to effect blending, for example by particle or melt blending. More specifically, the polymeric material, in the form of a dry powder or granules, can be mixed with the additional component or components using a suitable solids blending technique such as tumble blending or a high speed mixer. The blend thus obtained may be extruded into a lace which is chopped to give granules. The granules can be used to produce shaped articles by the use of a suitable forming operation, for example injection moulding or extrusion, to give a shaped article.

Alternatively, the compositions may be films, foil or powder/granules of the polymer with or without particulate additives, which are laminated with a fibrous filler material in the form of mats or cloths. Alternatively, fibres of the polymer may be co-woven with the fibrous filler material to form a composition of polymer and fibrous filler.

Alternatively, polymer compositions containing fibrous filler materials may be obtained by passing essentially continuous fibre, for example glass or carbon fibre, through a molten polymer or a molten mixture containing a polymer. The product obtained is a fibre coated with the polymer and the coated fibre may be used alone, or together with other materials, for example a further quantity of the polymer, to form a shaped article by an appropriate shaping technique. The production of polymer compositions by this technique is described in more detail in European Patent Specifications 56703; 102158 and 102159.

In the production of shaped articles from the polymers of the present invention or from polymer compositions containing the polymers of the present invention, it is important that the crystallinity of the polymer is developed as far as possible during the fabrication process, including any annealing stage, because subsequent use of an article which can continue to crystallise in use can result in dimensional changes occurring in the article with consequent warping or cracking and general change in physical properties. Furthermore, increased crystallinity results in improved environmental resistance.

To achieve improved crystallisation behaviour, the polymers of the present invention may be modified by forming, on the polymeric chains, terminal ionic groups -A -X, where A is an anion and X is a metal cation.

The anion is preferably selected from sulphonate, carboxylate, sulphinate, phosphonate, phosphate, phenate and thiophenate and the metal cation is an alkali metal or alkaline earth metal.

In polymers in accordance with this aspect of the present invention, the temperature for the onset of crystallisation, Tc, may be raised by at least 2°C in comparison with a similar polymer not containing the ionic end-groups. However, useful polymers are obtained even when there is little or no change in Tc if sufficient nucleation results from the presence of end groups to increase the number of spherulites in comparison with a similar composition not containing the ionic end groups.

Modified polymers according to this aspect of the invention are most suitably produced by reaction of a preformed polymer with reactive species containing the ionic group. Typical of such procedures are the reaction of a polymer which already contains an end group which can be displaced by a nucleophilic reagent with a species containing a reactive nucleophilic group and a group of formula -A -X as hereinbefore defined. For example, the polymer may have a terminal group selected from a fluoro, chloro or nitro group and the reactive species contains a nucleophilic group such as a phenate or thiophenate group, and a group of formula -A -X.

Alternatively, the preformed polymer may contain a terminal nucleophilic group and the ionic ended polymer may be formed by reaction of this group with a low molecular weight compound carrying a group which can be displaced by a nucleophilic reagent, such as chloro, fluoro or nitro group and the group of formula -A -X. It will be appreciated that a polymer having a terminal nucleophilic group can be readily derived from a polymer carrying a terminal group displaceable by a nucleophilic reagent. For example a fluorine ended polymer can be reacted with the low molecular weight compound carrying a fluoro, chloro or nitro group and an -A -X group in the presence of a base which will replace the fluorine end group to give a nucleophilic end group.

In a further procedure a polymer, regardless of the nature of its end-groups, preferably of high number average molecular weight, for example greater than about 10,000, is melted in the presence of a species having a nucleophilic group and a -A -X group under conditions which cause scission of the polymer chain. The conditions which cause scission are enhanced if the reaction is done at high temperature or in the environment of a solution rather than a melt but are primarily affected by the nature of the polymer chain. Whilst it is preferred to use polymers of high molecular weight so that the product of chain scission still has useful properties, we have found that low molecular weight products containing the terminal ionic groups are useful since they can influence the crystallisation behaviour of high molecular weight polymers which do not contain terminal ionic groups.

Modified polymers containing terminal ionic groups may be used alone to form shaped articles or may be blended with unmodified polymers to give a polymer blend which may be used to form shaped articles. The modified polymer, or a blend containing a modified polymer, may also be blended with other additives such as stabilisers or inorganic or organic fibrous or non-fibrous fillers, as hereinbefore described.

The production of modified polymers is described in more detail in our copending European Patent Application Publication No 152161. The procedure described in our said copending European Patent Application is generally applicable to the modification of the polymers of the present invention.

A polymeric material of improved crystallinity may be obtained by mixing the polymer with a nucleophilic reagent, in particular an alkali metal halide such as potassium fluoride, and heating the mixture at a temperature in excess of the glass transition temperature of the polymer for a time sufficient to give an increase in crystallinity.

Polyarylethers containing sulphone or ketone groups can be prepared by a nucleophilic process or an electrophilic process.

Electrophilic processes for preparing polymers of this type are described, inter alia, in British Patent specifications 971227; 1016245; 1387303; and 1558615 and United States Patent specifications 3441538; 3956240 and 4247682.

Nucleophilic processes for preparing polymers of this type are described, inter alia, in British Patent specification 1078234; 1153053; 1414421; 1563223; 1569602; 1569603; and 1586972 and Canadian Patent specification 847963.

Using an electrophilic process, the polymer is prepared by reacting for example acids, acid halides and esters, with a compound containing at least one aromatically active bound hydrogen atom, the process being effected with the aid of suitable strong acids or Lewis Acids as catalysts. A single compound containing an acid, acid halide or ester group and an aromatically activebound hydrogen atom may be used to give self-condensation. Alternatively, a compound containing two acid, acid halide or ester groups may be reactedwith a compound containing two aromatically active bound hydrogen atoms. Such processes have been effected using a reaction medium consisting of hydrogen fluoride and boron trifluoride. Handling of such materials can be hazardous and requires extensive safety precautions and accordingly we prefer to prepare the polymers of the present invention using a nucleophilic process.

Thus, according to a further aspect of the present invention we provide a process for the preparation of a polyarylether which comprises polycondensing, under substantially anhydrous conditions, in the presence of a base, at least one compound of the formula

$Y^1$ -Ph -CO -$Ar^1$ -CO -Ph -$Y^2$

with at least one compound of the formula

$Y^3$ -$Ar^3$ -$Y^4$

and/or with a polyarylethersulphone having the repeating units

-Ph-$SO_2$-Ph -

in which polyarylethersulphone the repeating units are linked by ether linkages,

wherein $Ar^1$ and Ph are as hereinbefore defined,

$Ar^3$ is a group Ph or is a polyaromatic group containing at least two aromatic groups which are either directly linked together or are linked together by -CO-or -$SO_2$-groups, wherein at least some of the groups $Ar^3$ contain a group -$SO_2$-if the polymerisation mixture does not include at least some of the polyarylethersulphone;

$Y^1$, $Y^2$, and, when present, $Y^3$ and $Y^4$ are each, independently, a halogen atom or a group -OH, and when $Y^3$ and/or $Y^4$ is a halogen atom the group $Ar^3$ is such that the, or each, halogen atom is activated by an inert electron - withdrawing group in at least one of the positions ortho-or para-to the, or each, halogen atom; and the proportions of the compound

$Y^1$ -Ph -CO -$Ar^1$ -CO -Ph -$Y^2$

and of the compound

$Y^3$ -$Ar^3$ -$Y^4$

are such, and the nature of $Y^1$, $Y^2$, and, when present, $Y^3$ and $Y^4$ is such, that the halogen atoms and the groups -OH are in substantially equimolar amounts.

We prefer that the halogen atoms are chlorine or, especially, fluorine. The use of substantially equimolar amounts of halogen and -OH groups is desirable since an excess either results in a reduction in the molecular weight of the polymer obtained. A slight excess of either halogen or -OH groups may be used, for example an excess of up to 5% mole, especially up to 2% mole, and, in particular, an excess of halogen may be used to obtain the most stable polymers.

It is convenient to use compounds in which $Y^1$ and $Y^2$ are the same, for example both halogen and in which $Y^3$ and $Y^4$ are the same, for example both -OH groups. However, mixtures of compounds may be used such that in some compounds $Y^1$ and $Y^2$, or $Y^3$ or $Y^4$, are both halogen and in other compounds $Y^1$ and $Y^2$, or $Y^3$ and $Y^4$, are both -OH groups. If the polycondensation mixture consists of a polyarylethersulphone having the repeating units

-Ph-$SO_2$-Ph -,

and the compound

$Y^1$ -Ph -CO -$Ar^1$ -CO -Ph -$Y^2$,

then either one of the groups $Y^1$ and $Y^2$ is halogen and the other of the groups $Y^1$ and $Y^2$ is an -OH group, or an essentially equimolar mixture of compounds is used and in one compound $Y^1$ and $Y^2$ are both halogen and in the other compound $Y^1$ and $Y^2$ are both -OH groups.

Compounds which may be used as the at least one compound of the formula

$Y^1$ -Ph -CO -$Ar^1$ -CO -Ph -$Y^2$

include, inter alia,

bis -4,4'-(4-chlorobenzoyl) biphenyl;

bis -4,4',-(4-fluorobenzoyl) biphenyl;

bis -4,4',-(4-hydroxybenzoyl) biphenyl; and

4 -(4-hydroxybenzoyl) -4'-(4-fluorobenzoyl) biphenyl

Compounds which may be used as the at least one compound of the formula

$Y^3$ -$Ar^3$ -$Y^4$

include, inter alia;

hydroquinone;

4,4' -dihydroxybiphenyl;

4,4' -dihydroxybenzophenone;

4,4' - difluorobenzophenone;

4,4' -dichlorodiphenylsulphone;

4,4' -dihydroxydiphenylsulphone;

bis -1,4 -(4-fluorobenzoyl) benzene;

bis -1,4 -(4-chlorobenozyl) benzene:

bis -1,4 -(4-hydroxybenzoyl) benzene;

bis -1,4 -(4-chlorophenylsulphonyl) benzene;

bis -4,4' -(4-chlorophenylsulphonyl) biphenyl;

1-(4-chlorophenylsulphonyl) -4-(4-fluorobenzoyl) benzene;

4-(4-chlorophenylsulphonyl) phenol; and

4-(4-fluorobenzoyl) phenol.

If a polyarylethersulphone (as defined) is used, breakdown of the polymer chain of the polyarylethersulphone occurs during the polycondensation reaction and the repeating units

$-Ph-SO_2-Ph-$

are incorporated into the polymer chains of the product of the polycondensation. Hence, when effecting the polycondensation in the presence of a polyarylethersulphone, compounds of the formula

$Y^3 -Ar^3 -Y^4$

need not be present in the polymerisation mixture and, if such compounds are present, it is not necessary that the group $Ar^3$ contains a group $-SO_2-$. However, it will be appreciated that polycondensation can be effected using at least one compound of the formula

$Y^1 -Ph -CO -Ar^1 -CO -Ph -Y^2$

at least one compound of the formula

$Y^3 -Ar^3 -Y^4$

and a polyarylethersulphone and in such a polycondensation mixture, none, some or all of the groups $Ar^3$ can contain a group $-SO_2-$.

We prefer to use a polyarylethersulphone which has, at most, a moderate molecular weight, for example a polymer having a reduced viscosity (RV) of not more than 0.6. The RV of the polyarylethersulphone polymer is measured at 25°C using a 1% weight/volume solution of the polymer in N,N-dimethylformamide.

It will be observed that, in the absence of the polyarylethersulphone, at least some of the groups $Ar^3$ must contain sulphone groups and hence in such a polymerisation mixture the compound $Y^3 -Ar^3 -Y^4$ must be a sulphone compound or, if there are two or more compounds $Y^3 -Ar^3 -Y^4$, at least one must be a sulphone compound.

We have obtained polymers having a useful combination of properties by effecting the polycondensation of

bis-4,4'-(4-chlorobenzoyl) biphenyl or, preferably,

bis-4,4'(4-fluorobenzoyl) biphenyl with a bisphenol which is

4,4'-dihydroxydiphenylsulphone alone or together with hydroquinone, 4,4'-dihydroxybiphenyl or 4,4'-dihydroxybenzophenone. Alternative polymers may be obtained by replacing a proportion of the compound of the formula

$Y^1 -Ph -CO -Ar^1 -CO -Ph -Y^2$

by compounds such as 4,4'-difluorobenzophenone, 4,4'-dichlorodiphenylsulphone or bis -4,4'-(4-chlorophenylsulphonyl) biphenyl. A yet further alternative is to effect polycondensation using an essentially equimolar mixture of a bis-4,4'-(4-halobenzoyl) biphenyl and bis-4,4'-(4-hydroxybenzoyl)biphenyl in the presence of a polyarylethersulphone in a sufficient amount to give a desired proportion of sulphone groups in the polymer product.

As indicated, the molecular weight of the polymer is influenced by the use of an excess quantity of halogen or -OH groups although slight excess of halogen or -OH groups, for example an excess of up to 5% mole, and especially of up to 2% mole, may be used and can be used to control the molecular weight of the polymer product. Alternatively, the molecular weight may also be controlled by the inclusion in the reaction mixture of a small proportion, for example less than 1% molar, and especially less than 0.1% molar, relative to the monomers, of a monofunctional compound such as a phenol or, preferably, an activated arylmonohalide.

The polymerisation reaction may be carried out in the presence of an inert solvent, or in the absence of a solvent.

Preferably a solvent is employed and is an aliphatic or aromatic sulphoxide or sulphone of formula

$R-S(O)_a-R'$

where a is 1 or 2; and

R or R', which may be the same or different, are alkyl or aryl groups, and may together form a divalent radical. Solvents of this type include dimethyl sulphoxide, dimethyl sulphone, and sulpholane (1,1-dioxothiolan) but the preferred solvents are aromatic sulphones of the formula

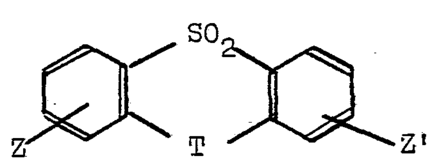

where T is a direct link, an oxygen atom or two hydrogen atoms (one attached to each benzene ring); and

Z and Z', which may be the same or different, are hydrogen atoms, alkyl, alkaryl, aralkyl or aryl groups.

Examples of such aromatic sulphones include diphenylsulphone, ditolylsulphone, dibenzothiophen dioxide, phenoxathiin dioxide and 4-phenylsulphonyl biphenyl. Diphenylsulphone is the preferred solvent. Other solvents that may be used include N,N-dimethyl formamide and N-methyl-2-pyrrolidone.

The polymerisation is effected in the presence of at least one base which is an alkali metal hydroxide, carbonate or bicarbonate.

If an alkali metal hydroxide is used, this is preferably pre-reacted with the phenol groups in the halophenol or bisphenol compounds used in the polycondensation to form an alkali metal halophenate or bisphenate. The salt should preferably be in a finely divided form, for example having a particle size of less than 1mm, and preferably less than 500 micrometres. The salt is conveniently formed in aqueous or methanolic solution and, since the polymerisation should be effected in the essential absence of -OH containing compounds such as water and alcohols, it is necessary to remove such materials, including any water which is present as water of crystallisation, prior to effecting the polymerisation. Thus, any halophenol or bisphenol used may be stirred in a solution of an alkali metal hydroxide in a solvent such as water or a 90:10 by volume mixture of methanol and water. The reactants are preferably used in the ratio of 1 mole of phenol groups in the halophenol or bisphenol to at least one mole of hydroxide. The mixture is stirred until the phenol compound has dissolved and then the solvent may be evaporated off, for example by spray drying, to give the alkali metal salt, which may be in the hydrated form. Any hydrated salt which is obtained is preferably dehydrated by removing the water, for example by evaporation under reduced pressure, or by heating the salt, preferably in the presence of a diaryl sulphone, at a temperature above 150°C, preferably above 200°C and preferably under partial vacuum, e.g. 25 to 400 torr. A particular advantage in dehydration of the alkali metal salt in the presence of a diaryl sulphone in the polymerisation vessel is that there is no splashing of the salt on the walls of the reaction vessel and hence stoichiometry of the polymerisation reaction is maintained because the diaryl sulphone does not boil. Any dihalo monomers which are to be used in the polymerisation can then be added after evolution of water has ceased, for example as indicated by cessation of foaming. After removal of the water, and the addition of any necessary dihalo monomers, the temperature is subsequently increased to the polymerisation temperature.

If the base is an alkali metal carbonate or bicarbonate, these are preferably used as the anhydrous materials. However, if hydrated salts are employed, these may be dehydrated during the period of heating up to the polymerisation temperature when a sufficiently high polymerisation temperature is being used.

The alkali metal hydroxide, carbonate or bicarbonate should be used in at least the stoichiometric proportion with respect to the phenolic groups in the compounds

$Y^1$ -Ph -CO -$Ar^1$ -CO -Ph -$Y^2$ and/or $Y^3$ -$Ar^3$ -$Y^4$

It is preferred to use a slight excess of the base and this is preferably an excess of in the range from 1 to 25%, particularly from 1 to 15%, molar relative to the proportion of phenolic groups present in the compounds

$Y^1$ -Ph -CO -$Ar^1$ -CO -Ph -$Y^2$ and/or $Y^3$ -$Ar^3$ -$Y^4$.

As discussed herein, the percentage crystallinity of the polymer is dependent, inter alia, on the relative arrangement of the structures IA and IB in the polymer chain and a higher percentage of crystallinity is obtained as the proportion of the structures IA linked together through ether linkages (to give the structures ID) is increased. The relative arrangement of the structures IA and IB, and hence the percentage crystallinity, is influenced by the conditions used for the polycondensation. Thus, if polycondensation of bis-4,4'-(fluorobenzoyl) biphenyl and 4,4'-dihydroxydiphenylsulphone is effected using a sodium compound, for example sodium carbonate, as the base, the polymer obtained contains a low proportion of repeating units of the structure ID, as shown by the NMR spectrum, and the polymer has a low percentage, or no, crystallinity. However, if polycondensation is effected using a base in which a part of the sodium has been replaced by an alkali metal of higher atomic number (hereafter simply "higher alkali metal"), for example caesium or preferably potassium, the polymer obtained contains a higher proportion of the structure ID and with a suitably high proportion of the structure ID has a crystallinity in excess of 10%. The molar proportion of the higher alkali metal is preferably at least 1.5% molar and does not exceed 15% molar of the total alkali metal. In general we prefer that the higher alkali metal is used in an amount of from 4 up to 12% molar, for example about 7% molar, of the total alkali metal. Proportions of the higher alkali metal of in excess of 15% molar of the total alkali metal does not appear to result in a further increase in the proportion of the structures ID or in the percentage crystallinity and indeed the use of such larger proportions may result in a decrease in the proportion of the structures ID and of the percentage crystallinity of the polymer. Hence, the use of not more than 15% molar of the higher alkali metal is preferred.

An increase in the proportion of the structures ID may be achieved by maintaining the maximum polycondensation temperature for a prolonged period, for example more than four hours. However, such a prolonged heating period is undesirable commercially and in general does not lead to a significant increase in the proportion of the structures ID.

Polymers which contain a lower proportion of the groups $-SO_2-$than are present in the polycondensation product of bis-4,4'-(4-fluorobenzoyl) biphenyl and 4,4'-dihydroxydiphenylsulphone generally have a greater percentage crystallinity. However, with such polymers, the percentage crystallinity can generally be enhanced by effecting the polycondensation using a base containing both a sodium compound and a compound of a higher alkali metal, for example a mixture of sodium carbonate and potassium carbonate.

As an alternative method of obtaining a satisfactory level of crystallinity, a polymer of low crystallinity may be mixed with a nucleophilic reagent, for example an alkali metal halide such as potassium fluoride, and the mixture then heated to a temperature in excess of the glass transition temperature of the polymer. Such a process is effected subsequent to the separation of the polymer from the polycondensation mixture. As will be appreciated, the proportion of crystallinity which can be attained is dependent on the polymer composition.

The polymerisation reaction is carried out at an elevated temperature of at least 150°C, preferably from 250°C up to 400°C, particularly from 280°C up to 350°C. As with all chemical reactions, an increase in reaction temperatures leads to shorter reaction times but with attendant risk of product decomposition and/or side reactions whereas a decrease in reaction temperature leads to longer reaction times but less product decomposition. However a temperature should be used which maintains the polymeric material in solution. In general the solubility of polymer in the polymerisation solvent, for example a diaryl sulphone, increases with temperature. Solubility also increases with increasing proportion of sulphone groups in the polymer chain. Accordingly polymers having a higher proportion of sulphone groups can, if desired, be produced at slightly lower polymerisation temperatures.

In order to obtain products of improved properties, particularly when using relatively volatile monomers such as hydroquinone or 4,4'-difluorobenzophenone, it may be advantageous to use a prepolymerisation heating stage in which the monomers are heated together at a temperature at which some oligomerisation occurs but little, if any, polymerisation occurs. For many of the monomer mixtures used in accordance with the present invention, such prepolymerisation heating can be effected at 200°C to 250°C, particularly 220°C to 245°C. The oligomerisation is believed to result in the formation of relatively involatile oligomers and hence to reduce the possibility of volatile monomers being removed from the reaction mixture.

To neutralise any reactive oxygen-containing anions, a reagent therefor may be introduced into the polymerisation reaction. Reactive monofunctional halides, for example methyl chloride, and reactive aromatic halides such as, for example, 4,4'-difluorobenzophenone or 4-fluorobenzophenone are particularly suitable. At the completion of polymerisation, the reaction mixture may be (1) allowed to cool and, depending on the polymerisation solvent, to solidify, (ii) ground, (iii) treated to remove any polymerisation solvent, for example by extraction with a solvent for the solvent, conveniently with an alcohol for example methanol or acetone, and water, and finally (iv) dried.

The polymerisation is preferably carried out in an inert atmosphere e.g. argon or nitrogen. The reaction vessel can be made from glass but for operation on a large scale is preferably made from stainless steels (other than those which undergo surface crazing at the reaction temperatures in the presence of alkali metal halide), or made of, or lined with, titanium, nickel or an alloy thereof or some similarly inert material.

The polymerisation process can be effected to produce a polymer of the desired molecular weight or it may be effected to produce an intermediate product which is a polymer of lower molecular weight than that ultimately required and then, after or during shaping of this low molecular weight material, subjecting the polymer to conditions to cause an increase in the molecular weight thereof. More specifically, the molecular weight of the polymer is increased by providing a mixture of (1) at least one polymer of the type hereinbefore described and comprising polymer chains having end groups selected from groups of formula

$-Ar^4-X^1$, and

$-Ar^4-OD$

and 2) a reagent having nucleophilic activity selected from a) alkaline salts of Group I and Group II metals and b) reagents have radicals $-X^1$ and $-OD$, reactive respectively with the end groups $-Ar^4-OD$ and $-Ar^4-X^1$, wherein when the end group is $-Ar^4-X^1$ the reagent is either (a) a difunctional reagent having either both end groups in the form of reactive -OD groups or (b) a difunctional reagent having one reactive -OD group and one reactive $-X^1$ group and when the end group is $-Ar^4-OD$ the reagent is a difunctional reagent have reactive end groups $-X^1$, and wherein

$Ar^4$ represents an arylene radical, preferably a phenylene radical'

$X^1$ is a monovalent radical capable of nucleophilic displacement from $Ar^3$, preferably selected from halogen, nitrile -(CN) or nitro ($NO_2$) radicals; and

D is a univalent metal,

and heating the mixture to a temperature above the melting point of the polymer until a desired increase in molecular weight has occurred. This procedure is described in more detail in European Patent Application Publication No 125816. This technique can be used for increasing the molecular weights of polymers used in the production of composites or of polymers used for powder coating or rotational moulding.

In testing the polymers of the present invention, the toughness of some of the polymers is determined. The test used to determine the toughness of a polymer is one in which a thin film (about 0.2 mm thick) is compression moulded from a sample of the polymer at 400°C, or at temperature at least 30°C above the polymer melting point, in a press (440MN/$m^2$ for 5 minutes), cooling the film slowly to induce complete crystallisation or quench cooling the film and then annealing to induce the requisite crystallisation. The film is flexed through 180°C to form a crease, whereby the two faces of the film formed about the crease touch. The film is compressed manually to form the crease line. If the film survives this treatment without breaking (e.g. snapping or tearing) it is deemed to be tough, if it fails on the formation of the crease, it is deemed to be brittle.

Further aspects of the present invention are now set out in the following illustrative examples.

Example 1

10.16 g (0.0255 mole) of bis -4,4'-(4-fluorobenzoyl) biphenyl, 6.26 g (0.0250 mole) of 4,4'-dihydroxydiphenyl sulphone and 54.7 g of diphenylsulphone were charged, under nitrogen, into a 3-necked 100 $cm^3$ glass flask equipped with a stirrer, nitrogen inlet and an air condenser. A nitrogen atmosphere has been established in the flask before charging the reactants and was maintained throughout the following operations.

The contents of the flask were heated, with stirring, to 210°C to form a nearly colourless solution and 0.07 g of anhydrous potassium carbonate and 2.64 g of anhydrous sodium carbonate, both of which had been sieved through a screen with a mesh size of 300 micrometres, were added. Whilst continuing to stir, the temperature of the flask and its contents was raised, over a period of 1.5 hours to 300°C and was maintained at that temperature for 0.5 hours, the product being in solution at this stage. The temperature was then raised to 320°C over a period of 0.75 hours and maintained at 320°C for 1.5 hours. The mixture was cooled by casting into a sheet. The resulting solid reaction product was milled using a hammer mill to give a product capable of passing through a screen with a mesh size of 850 micrometres. Diphenylsulphone and inorganic salts were removed by washing successively, at ambient temperature, with acetone and water. The resulting solid polymer was dried at 140°C in an air oven.

The polymer consisted of the repeat units

-Ph -CO -Ph -Ph -CO -Ph -and -Ph -$SO_2$ -Ph -

linked through ether linkages.

A solution of 1 g of the polymer in 100cm$^3$ of concentrated (98%) sulphuric acid had a reduced viscosity, measured at 25°C, of 1.8. 10 mg of the polymer was subjected to the determination of Tg and Tm using a Perkin-Elmer DSC 1B instrument, using a heating rate of 16°C/minute under nitrogen. The glass transition temperature (Tg) was determined using a quenched (amorphous) sample and Tg was measured as the intercept of two straight lines drawn as tangents at the break in the heating curve. The polymer had a glass transition temperature of 212°C and a melting temperature of 380°C.

A sample of .the polymer was formed into a film by compression moulding at 420°C in a press (10 tonnes/cm$^2$ for two minutes) to give a film about 0.2 mm thick, cooling the film slowly under the applied pressure, releasing pressure at 120°C after about 30 minutes cooling, removing the film from the press and allowing the film to further cool to room temperature. The film was found to be tough by the creasing test described herein. A sample of the creased film was immersed in methylene chloride for two minutes and was found to be unaffected by this treatment.

Example 2

The procedure of Example 1 was repeated with the following changes.

10.16 g (0.0255 mole) of bis -4,4'-(4-fluorobenzoyl) biphenyl, 0.063 g (0.0025 mole) of 4,4'-dihydroxydiphenyl sulphone and 4.82 g (0.0225 mole) of 4,4'-dihydroxybenzophenone and 52.03 g of diphenylsulphone were used. The mixture of monomers and diphenylsulphone was melted at 200°C, and the potassium and sodium carbonates were added at this temperature which was maintained for a further two hours. The temperature was raised to 300°C over 0.5 hours, maintained at 300°C for two hours, raised to 310°C and maintained at 310°C for 0.5 hours. The procedure was then as described for Example 1.

The polymer consisted of the repeat units

-Ph -CO -Ph -Ph -CO -Ph -

-Ph -$SO_2$ -Ph -, and

-Ph -CO -Ph -

linked through ether linkages, with the units being in the relative molar proportions of 50:5:45 respectively.

The polymer had a glass transition temperature of 177°C and a melting temperature of 350°C.

Examples 3 to 7

The procedure of Example 2 was repeated with increasing proportions of 4,4'-dihydroxydiphenylsulphone and correspondingly decreasing proportions of 4,4'-dihydroxybenzophenone.

The relative proportions of the monomers used, the reaction conditions and the properties of the polymers obtained are set out in Table One.

Table One

| Example | Monomers Type (a) | Mole (%) | Max Temp (°C) | Tg (°C) (b)(d) | Tm (°C) (c)(d) |
|---|---|---|---|---|---|
| 3 | LKF | 50 | 330 | 183 | 395 |
| | Bis S | 10 | | | |
| | DHB | 40 | | | |
| 4 | LKF | 50 | 320 | 185 | 404 |
| | Bis S | 15 | | | |
| | DHB | 35 | | | |
| 5 | LKF | 50 | 320 | 189 | 394 |
| | Bis S | 20 | | | |
| | DHB | 30 | | | |
| 6 | LKF | 50 | 360 | 199 | 405 |
| | Bis S | 25 | | | |
| | DHB | 25 | | | |
| 7 | LKF | 50 | 320 | None | None |
| | Bis S | 30 | | | |
| | DHB | 20 | | | |

Notes to Table 1

a) LKF is bis-4,4'-(4-fluorobenzoyl) biphenyl.

Bis S is 4,4'-dihydroxydiphenylsulphone.

DHB is 4,4'-dihydroxybenzophenone.

b) Tg is the glass transition temperature as determined using the method of differential scanning calorimetry as described in Example 1.

c) Tm is the melting temperature as determined using the method of differential scanning calorimetry as described in Example 1.

d) None means that under the conditions of the test this transition temperature could not be determined.

Examples 8 to 12

The general procedure of Examples 3 to 7 was repeated with the exception that 4,4'-dihydroxybiphenyl was used rather than 4,4-dihydroxybenzophenone. Further details are given in Table Two.

Table Two

| Example | Monomers Type (a) (e) | Mole (%) | Max Temp (°C) | Tg (°C) (b) | Tm (°C) (c) |
|---|---|---|---|---|---|
| 8 | LKF | 50 | 330 | 220 | 290 |
| | Bis S | 45 | | | |
| | DHDP | 5 | | | |
| 9 | LKF | 50 | 330 | 215 | 325 |
| | Bis S | 35 | | | |
| | DHDP | 15 | | | |
| 10 | LKF | 50 | 330 | 209 | 400 |
| | Bis S | 25 | | | |
| | DHDP | 25 | | | |
| 11 | LKF | 50 | 360 | 214 | 425 |
| | Bis S | 15 | | | |
| | DHDP | 35 | | | |
| 12 | LKF | 50 | 360 | 234 | > 460 |
| | Bis S | 5 | | | |
| | DHDP | 45 | | | |

Notes to Table Two

(a), (b) and (c) are all as defined in Notes to Table One.

(e) DHDP is 4,4'-dihydroxybiphenyl.

The polymers obtained in Examples 8 to 12 consisted of the repeat units

-Ph -CO -Ph -Ph -CO -Ph,

- Ph $-SO_2$ -Ph -, and

-Ph -Ph -

linked through ether linkages, with the units being in the relative molar proportions of 50:45:5; 50:35:15; 50:25:25; 50:15:35 and 50:5:45 respectively.

Examples 13 to 16

The general procedure of Examples 3 to 7 was repeated with the exception that bis-4,4'-(4-fluorobenzoyl) biphenyl; 4,4'-difluorobenzophenone; 4,4'-dihydroxydiphenylsulphone and 4,4'-dihydroxybiphenyl were used in various proportions. Further details are given in Table Three.

Table Three

| Example | Monomers Type (a)(f)(e) | Mole (%) | Max Temp (°C) | Tg (°C) (b) | Tm (°C) (c)(d) |
|---|---|---|---|---|---|
| 13 | LKF | 40 | 330 | 218 | None |
| | BDF | 10 | | | |
| | Bis S | 25 | | | |
| | DHDP | 25 | | | |
| 14 | LKF | 30 | 330 | 210 | None |
| | BDF | 20 | | | |
| | Bis S | 25 | | | |
| | DHDP | 25 | | | |
| 15 | LKF | 20 | 330 | 197 | None |
| | BDF | 30 | | | |
| | Bis S | 25 | | | |
| | DHDP | 25 | | | |
| 16 | LKF | 10 | 330 | 203 | None |
| | BDF | 40 | | | |
| | Bis S | 25 | | | |
| | DHDP | 25 | | | |

Notes to Table Three

(a), (b) (c) and (d) are all as defined in Notes to Table One.

(e) is as defined in Notes to Table Two.

(f) BDF is 4,4'-difluorobenzophenone.

The polymers obtained contained the repeating units

-Ph -CO -Ph -Ph -CO -Ph -; and

-Ph -CO -Ph -

linked to the repeating units

-Ph $-SO_2$ -Ph -; and

-Ph -Ph -

through ether linkages in various proportions.

Examples 17 to 19

The general procedure of Example 1 was repeated with the exception that part, or all, of the bis-4,4'-(4-fluorobenzoyl) biphenyl was replaced by other dihalo-compounds, and the 4,4-dihydroxybiphenyl sulphone was replaced by other dihydroxy-compounds. Further details are given in Table Four.

## Table Four

| Example | Monomers Type (a)(e)(g) | Monomers Mole (%) | Max Temp (°C) | Tg (°C) (b) | Tm (°C) (c)(d) |
|---|---|---|---|---|---|
| 17 | LKF<br>DCDPS<br>HQ | 25<br>25<br>50 | 310 | 171 | 400 |
| 18 | LKF<br>DCDPS<br>DHDP | 25<br>25<br>50 | 350 | 213 | 443 |
| 19 | LKC<br>LCDC<br>DHDP | 25<br>25<br>50 | 320 | 223 | None |

Notes to Table Four

(a), (b) (c) and (d) are all as defined in Notes to Table One.

(e) is as defined in Notes to Table Two.

(g) DCDPS is 4,4'-dichlorodiphenylsulphone.

HQ is hydroquinone.

LKC is bis-4,4'-(4-chlorobenzoyl) biphenyl

LCDC is bis-4,4'-(4-chlorophenylsulphonyl) biphenyl.

The polymer of Example 17 contained the repeating units

-Ph -CO-Ph -Ph -CO -Ph -

-Ph -

and

-Ph $-SO_2$ -Ph -

linked through ether linkages with the units being in the relative molar proportions of 25:50:25 respectively.

The polymer of Example 18 contained the repeating units

-Ph -CO -Ph -Ph -CO -Ph -

-Ph -Ph -

and

-Ph $-SO_2$ -Ph -

linked through ether linkages with the units being in the relative molar proportions of 25:50:25 respectively.

The polymer of Example 19 contained the repeating units

-Ph -CO -Ph -Ph -CO -Ph -

-Ph -Ph -

and

-Ph $-SO_2$ -Ph -Ph $-SO_2$ - Ph -

linked through ether linkages with the units being in the relative molar proportions of 25:50:25 respectively.

Example 20

The procedure of Example 1 was repeated on a larger scale using the following quantities and conditions.

104.6 g (0.263 mole) of bis-4,4'-(4-fluorobenzoyl) biphenyl, 62.6 g (0.250 mole) of 4,4'-dihydroxydiphenylsulphone and 557 g of diphenylsulphone were charged, under nitrogen, into a 3-necked, one $dm^3$ glass flask equipped with a stirrer, nitrogen inlet and thermometer. The flask was purged with a stream of nitrogen for one hour without heating.

The flask was then heated, with stirring, to 230°C, maintained at that temperature until all of the bis-4,4'-(4-fluorobenzoyl) biphenyl had dissolved, and the temperature was then allowed to fall to 210°C. 26.4 g (0.0250 mole) of anhydrous sodium carbonate and 0.7 g (0.0005 mole) of anhydrous potassium carbonate, both of which had been sieved through a screen of mesh size of 300 micrometres,

were then added over a period of one minute to the contents of the flask. The contents of the flask were maintained, with stirring, at 210°C for one hour, the temperature was raised to 250°C, maintained at 250°C for 30 minutes, the temperature raised to 300°C, maintained at 300°C for 30 minutes, the temperature raised to 320°C and maintained at 320°C for three hours.

The mixture was cooled by casting into trays. The solidified product was then crushed using a hammer mill to give a product capable of passing through a screen with a mesh size of 850 micrometres. The crushed product was then washed with acetone and water and dried as in Example 1.

The polymer obtained consisted of the same repeat units as polymer of Example 1 and had a melt viscosity, measured at 420°C, of 0.9 $kNsm^{-2}$.

Example 21

A blend of the polymer product of Example 20 and diphenylsulphone was used to produce a composite material.

The polymer product of Example 20 was dry blended with diphenylsulphone by tumbling the materials together in a closed container in a weight ratio of one part of polymer to two parts of diphenylsulphone.

The mixture of polymer and diphenyl sulphone thus prepared was used to impregnate continuous carbon fibres according to the following procedure. This procedure is described in European Patent Application Publication No 56703.

8 collimated tows of continuous carbon fibres - ("Magnamite" AS-4 supplied by Hercules Inc of Delaware, USA), each tow containing 12000 individual filaments were drawn at a rate of 300 mm/minute over a series of stationary guide bars to provide a band of width about 45 mm having a tension of about 50 kg. When the fibres had been guided into contiguous relationship they were pulled over a series of 4 fixed, heated, cylindrical bars of 12.5 mm diameter maintained at 420°C. The powder mixture of polymer and diphenyl sulphone was fed to the nip formed between the carbon fibre band and the first fixed cylindrical bar. The powder melted rapidly to provide a melt pool in the nip which impregnated the fibre band passing over the bar. The structure was passed over and under the three further heated bars without the addition of further of the polymer mixture. Provision was made for extracting the fumes of diphenyl sulphone which were evolved. The product obtained was a continuous tape, 45 mm wide and about 0.125 mm thick containing 60% by volume of the carbon fibre which had been well wetted by the polymer.

Sections cut from the impregnated tape were laminated together by compression moulding at 420°C for five minutes at an applied pressure of 10 $MN/m^2$ and cooled under pressure at 10°C/minute to room temperature. The impregnated tape was laid up to give an orientation of $[+45°, -45°]_s$ and a laminate thickness of about 0.5 mm using four thicknesses of the impregnated tape. The matrix polymer at this stage was judged to be amorphous as indicated by the transparency of excess polymer squeezed from the moulding during the foregoing procedure.

The laminates thus obtained were annealed for 1.5 hours at 290°C. After this annealing stage, the excess resin was noted to be opaque and microscopic examination showed a spherulitic structure indicating the presence of a crystalline polymer phase.

The annealed laminated tape obtained as described was subjected to a series of tests of its mechanical properties, which are reported in Table Five.

Table Five

| Temperature | Relative Flexural Modulus (h) | | |
|---|---|---|---|
| (°C) | Eg 21 (i) | PES (j) | AP (k) |
| 20 | 1.00 | 1.00 | 1.00 |
| 100 | 0.98 | 0.99 | 0.98 |
| 150 | 0.96 | 0.97 | 0.83 |
| 200 | 0.92 | 0.94 | 0.61 |
| 250 | 0.42 | 0.10 | 0.52 |
| 300 | 0.34 | 0 | 0.44 |
| 350 | 0.12 | 0 | MOLTEN |

Notes to Table Five

(h) Relative Flexural Modulus is the ratio.

Flexural Modulus at T°C.

Flexural Modulus at 23°C

Flexural Modulus was determined by dynamic mechanical analysis using a DuPont 981 Dynamic Mechanical Analyser and heating at 5°C/minute from -140°C with an oscillation amplitude of 0.2 mm, as recommended for polymers. At 23°C, Eg 21, PES and APC all had a flexural modulus of about 17 $GN/m^2$. Absolute values of flexural

modulus are not regarded as meaningful on the equipment used. The test samples were 50 mm x 12.7 mm specimens obtained from a laminate as defined in Notes (i), (j) and (k).

(i) Eg 21 is the annealed laminated tape of Example 21.

(j) PES is a laminated tape produced in a similar manner to the procedure of Example 21 but using polyethersulphone - ('VICTREX' (Registered Trade Mark) PES aromatic polymer 600 P grade, obtainable from Imperial Chemical Industries PLC) rather than the product of Example 20.

(k) APC is APC 2, a composite material available from Imperial Chemical Industries PLC.

For many practical applications, the useful temperature range of a structural composite requires that the stiffness does not change by more than 10%. Applying this criterion, Eg 21 and PES are serviceable to above 200°C whilst APC is serviceable to 125°C. However, PES is based on an amorphous polymer and hence is vulnerable to stress cracking in the presence of many solvents, particularly organic solvents. Eg 21 is based on a crystalline material and is much less vulnerable to stress cracking in the presence of solvents.

The laminated product of Example 21 was tested for stiffness and strength at 23°C. The axial modulus and the axial strength were determined using the procedure of ASTM Test Method D790 with a span/thickness ratio of 50:1. The transverse strength was determined by the procedure of ASTM Test Method D 790 with a span/thickness ratio of 25:1. The short beam shear strength was determined by the procedure of ASTM Test Method D 2344 with a span/thickeness ratio of 5:1. The axial modulus was 102 GN/m², the axial strength was >1400 MN/m², the transverse strength was 77 MN/m² and the short beam strength was 84 MN/m².

The impregnated tape of Example 21 was laid up in a 90° cross ply to a thickness of 1.5 mm, was press moulded at 420°C for five minutes at an applied pressure of 10 MN/m² and cooled under pressure at 10°C/minute to room temperature. The annealed laminate was then subjected to impact testing, by an instrumented falling weight impact test. A dart of 12.7 mm in diameter was used with a 40 mm diameter support ring. Details of this test are described by C J Hooley and S Turner in Mechanical Testing of Plastics Institute of Mechanical Engineers, June/July 1979, Automotive Engineer.

The energy to initiate damage was 2.6 J and the total energy to failure was 9.6 J. Inspection of the impacted sample showed that damage was localised to the immediate vicinity of the punch through with very little delamination, this being similar to the failure shown by APC-2.

Examples 22 to 26

A series of polycondensations were carried out using sodium carbonate alone or containing different proportions of potassium carbonate.

The polycondensation of Example 22 was carried out by repeating the procedure of Example 21 using

103.78g (0.26 moles) of bis-4,4'-(4-fluorobenzoyl)biphenyl

62.57g (0.25 moles) of 4,4'-dihydroxydiphenylsulphone,

26.5g (0.25 mole) of sodium carbonate,

0.69 g (0.005 moles) of potassium carbonate and

554.5g of diphenylsulphone

The polycondensation of Example 23 was carried out by repeating the procedure of Example 21 but using smaller quantities of reactants, as follows:-

76.2g (0.191 moles) of bis-4,4'-(4-fluorobenzoyl)biphenyl

46.95g (0.188 moles) of 4,4'-dihydroxydiphenylsulphone,

19.8g (0.187 moles) of sodium carbonate,

0.6g (0.004 moles) of potassium carbonate and

334.5g of diphenylsulphone.

In Examples 24 to 26, the polycondensations were carried out by repeating the procedure of Example 1 using 10.47g (0.0263 moles) of bis-4,4'-(4-fluorobenzoyl)biphenyl, 6.26g (0.0250 moles) of 4,4'-dihydroxydiphenylsulphone, 39g of diphenylsulphone and sufficient of sodium carbonate or a mixture of sodium carbonate and potassium carbonate to provide 102% molar of alkali metal relative to the phenolic groups present in 4,4'-dihydroxydiphenylsulphone.

The reduced viscosity of each polymer was determined as a 1% solution in concentrated sulphuric acid. The glass transition temperature was also determined. Annealed films, which had been annealed at 300°C for 1.5 hours and then allowed to cool in air, were subjected to DSC and from the heating curve obtained an estimate of the percentage crystallinity was obtained. Using carbon -13 NMR, the ratio of the structure ID to the structure IC was obtained. The results are set out in Table Six.

## Table Six

| Example | Na/K (l) | RV (m) | Tg (°C) (b) | Crys % (n) | ID : IC (o) |
|---|---|---|---|---|---|
| 22 | 100/2 | 0.94 | 205 | ND | 0.19 |
| 23 | 100/2 | 2.04 | 214 | 0 | 0.28 |
| 24 | 95/7 | 0.88 | 210 | 12.9 | 0.95 |
| 25 | 90/12 | 1.18 | 210 | 11.7 | 0.85 |
| 26 | 102/0 | 0.58 | 198 | ND | 0.14 |

Notes to Table Six

(b) is as defined in Notes to Table One

(l) Na/K is the molar ratio of sodium to potassium expressed as a molar percentage of the phenolic groups present in 4,4'-dihydroxydiphenylsulphone, thus 100 indicates an equimolar proportion relative to the phenolic groups.

(m) RV is the reduced viscosity measured at 25°C using a solution of 1g of the polymer in 100 $cm^3$ of concentrated (98%) sulphuric acid.

(n) Crys % is the percentage crystallinity as deduced from the DSC curve. ND means not determined.

(o) ID : IC is the ratio of the units of the structure

-Ph -CO -Ph -Ph -CO -Ph -O -Ph -CO -Ph -Ph -CO -Ph -

to the units of the structure

-Ph -CO -Ph -Ph -CO -Ph -O -Ph -$SO_2$ -Ph -

as determined from the carbon-13 NMR spectrum of the polymer. This ratio is zero in a polymer having a regular alternating structure with each unit IA linked, at either end, to a unit IB.

The ratio is one in a polymer in which the arrangement of the units IA and the units IB is at its most random.

Examples 27 to 31

The procedure of Examples 24 to 26 was repeated using higher proportions of potasium carbonate. The polymers obtained were tested and the results of the tests are set out in Table Seven.

## Table Seven

| Example | Na/K (l) | RV (m) | Tg (°C) (b) | Crys % (n) | $CH_2Cl$ uptake (p) |
|---|---|---|---|---|---|
| 27 | 80/22 | 1.12 | 201 | 8.0 | 39.6 |
| 28 | 60/42 | 0.79 | 201 | 9.0 | 33.0 |
| 29 | 40/62 | 0.96 | 201 | 8.5 | 34.7 |
| 30 | 20/82 | 0.95 | 201 | 8.0 | 38.4 |
| 31 | 2/100 | 0.90 | 201 | 8.0 | 40.2 |

Notes to Table Seven

(b) is as defined in Notes to Table One

(l), (m) and (n) are all as defined in Notes to Table Six

(p) $CH_2Cl_2$ uptake is the weight percent increase of a sample of film which has been immersed in methylene chloride at ambient temperatue for 24 hours.

Examples 32 to 36

The procedure of Examples 24 to 26 was repeated using a mixture of sodium carbonate and potassium carbonate in the molar proportions, relative to the phenyl groups in 4,4'-dihydroxydiphenylsulphone, of 100 and 2 respectively. The maximum temperature attained was 330°C and this temperature was maintained for various periods of time before cooling and recovering the polymer. The results obtained are set out in Table Eight.

Table Eight

| Example | Time at 330°C (hours) | RV (m) | Tg (°C) (b) | $CH_2Cl_2$ uptake (p) |
|---|---|---|---|---|
| 32 | 2.5 | 0.99 | 205 | 53.5 |
| 33 | 3.5 | 1.14 | 205 | 45.5 |
| 34 | 4.5 | 1.17 | 205 | 64.1 |
| 35 | 5.5 | 1.26 | 211 | 47.4 |
| 36 | 6.5 | 1.30 | 212 | 55.5 |

Notes to Table Eight

(b) is as defined in Notes to Table One

(m) is as defined in Notes to Table Six

(p) is as defined in Notes to Table Seven

The extended reaction time has resulted in an increased molecular weight, as indicated by RV, but, as judged from the methylene chloride uptake results, there has been no significant effect on the percentage crystallinity.

Example 37

The procedure of Example 20 was repeated with the following variations.

The reaction mixture was 103.8g (0.26 mole) of bis-4,4'-(4-fluorobenzoyl)biphenyl, 43.8g (0.175 mole) of 4,4'-dihydroxyldiphenylsulphone, 13.97g (0.075 mole) of 4,4'-dihydroxybiphenyl, 26.4g (0.25 mole) of sodium carbonate, 0.7 g (0.005 mole) of potassium carbonate and 539g of diphenylsulphone.

The diphenylsulphone, bis-4,4'-(4-fluorobenzoyl) biphenyl and 4,4'-dihydroxybiphenyl were placed in the reaction flask which was purged with nitrogen overnight. The flask was heated to 200°C and stirring was commenced when the mixture become molten. Sodium carbonate was then added in a molar quantity equivalent to the phenolic groups of the 4,4'-dihydroxybiphenyl present in the mixture and stirring under nitrogen was continued for one hour. The 4,4'-dihydroxydiphenylsulphone, the rest of the sodium carbonate and all of the potassium carbonate were then added. The temperature was raised to 250°C, maintained at 250°C for 0.5 hours; the temperature then raised to 265°C, maintained at 265°C for 1.5 hours, the temperature raised further to 300°C, maintained at 300°C for 0.5 hours and finally the temperature was raised to 330°C and maintained at 330°C for 1.5 hours.

The polymer was then recovered as in Example 20. The polymer obtained had a reduced viscosity (as defined in note (m) to Table Six) of 0.98, a percentage crystallinity - (as defined in note (n) to Table Six) of 19%, a Tg of 205°C and a Tm of 360°C. The polymer contained the units

-Ph -CO -Ph -Ph -CO -Ph -,

-Ph -$SO_2$ -Ph -

and

-Ph -Ph -

linked through ether linkages in the molar proportions 50:35:15.

Example 38

The procedure of Example 21 was repeated using the polymer product of Example 37. An impregnated tape containing 72% by weight of carbon fibre was obtained. The impregnated tape was laid to give a unidirectional orientation and a laminate thickness of about 2 mm using 16 thickness of the impregnated tape. Lamination was effected by compression moulding and cooling as described in Example 21. The transverse strength and short beam shear strength were determined as in Example 21 and were 98.6 $MN/m^2$ and $60.5MN/m^2$ respectively. Axial modulus, and

also axial strength, parallel to the fibre direction, were determined as described in Example 21 using the procedure of ASTM Test Method D790 with a span/thickness ratio of 50:1 and were 141.7GN/$m^2$ and 1762 MN/$m^2$ respectively.

Example 39

The procedure of Example 1 was repeated with the following variations.

2g (0.00502 moles) of bis-4,4'-(4-fluorobenzoyl) biphenyl, 1.98g (0.00502 moles) of bis-4,4'-(4-hydroxybenzoyl) biphenyl and 17.2g of diphenylsulphone were placed in a two necked flask and heated up to 200°C under nitrogen. Once a solution had formed, the stirrer was started. 0.53g (0.005 moles) of sodium carbonate and 0.041g - (0.0001 moles) of potassium carbonate were added to the stirred mixture and stirring at 200°C was continued for one hour. 1.16g (0.005 moles based on the repeating unit -Ph-$SO_2$-Ph-) of a polyarylethersulphone containing the repeating units -Ph-$SO_2$-Ph-joined by ether linkages and having -OH ended chains and a reduced viscosity (measured at 25°C using a 1% weight/volume solution of the polymer in N,N-dimethylformamide) of 0.50 ('Victrex' (Registered Trade Mark) PES aromatic polymer 5003 P grade, obtainable from Imperial Chemical Industries PLC) were then added to the stirred mixture, together with 0.08 g of bis-4,4'-(4-fluorobenzoyl)biphenyl, 0.53g of sodium carbonate and 0.014g of potassium carbonate. The mixture was then heated to 250°C, maintained at 250°C for 0.5 hours, the temperature was raised to 300°C and maintained at 300°C for 0.5 hours and finally the temperature was raised to 330°C and maintained at 330°C for 2.5 hours.

The mixture was then cooled and the polymer recovered as in Example 1.

A 1% weight/volume solution of the polymer in concentrated sulphuric acid had a reduced viscosity, measured at 25°C, of 0.94. The polymer had a glass transition temperature of 197°C and a melting temperature of 398°C.

**Claims**

1. A polyarylether which contains repeating units of the structure

IA. -Ph -CO -$Ar^1$ -CO -Ph -

together with units of the structure

IB. -$Ar^2$ -

wherein IA and IB are linked through ether linkages

Ph is a phenylene group;

$Ar^1$ is a polyaromatic group containing at least two aromatic groups directly linked together; and

$Ar^2$ is a group Ph or is a polyaromatic group containing at least two aromatic groups which are either directly linked together or are linked together by -CO -or -$SO_2$ -groups, wherein at least some of the groups $Ar^2$ contain a group -$SO_2$ -.

2. A polyarylether as claimed in claim 1 wherein $Ar^1$ is 4,4'-biphenylene and $Ar^2$ is at least one of 4,4'-biphenylene; para-phenylene; 4,4'-diphenylene sulphone; 4,4'-diphenylene ketone; 1,4-bis(4-benzoyl) benzene or 1,4-bis-(4-phenylsulphonyl)benzene and at least some of the groups $Ar^2$ contain a group -$SO_2$ -.

3. A polyarylether as claimed in either of claim 1 or claim 2 which contains at least 25 mole % of each of the structures IA and IB.

4. A polyarylether as claimed in any one of claims 1 to 3 which contains some structures in which the units IA are linked together through ether linkages and/or in which the units IA are linked through ether linkages to groups $Ar^2$ which do not contain a group -$SO_2$-.

5. A polyarylether as claimed in claim 1 in which the structure IA is of the type

-Ph -CO -Ph -Ph -CO -Ph -;

and the structure IB is of the type

-Ph -$SO_2$ -Ph -

and the polymer also includes repeat units of the structure

-Ph -Ph -

the repeating units being linked through ether linkages.

6. A polyarylether as claimed in any one of claims 1 to 5 which has a glass transition temperature of at least 180°C and a melting temperature of at least 300°C and not more than 430°C.

7. A polymer composition comprising a polyarylether as claimed in any one of claims 1 to 6 together with at least one additive which is selected from a different polymeric material; inorganic and organic fibrous fillers; organic and inorganic fillers; nucleating agents; stabilisers; and nucleophilic reagents.

8. A polymer composition as claimed in claim 7 which is the product obtained by passing essentially continuous fibre into contact with a molten polyarylether, or a molten mixture containing a polyarylether.

9. A process for the preparation of a polyarylether which comprises polycondensing, under substantially anhydrous conditions, in the presence of a base, at least one compound of the formula

$Y^1$ -Ph -CO -$Ar^1$ -CO -Ph -$Y^2$

with at least one compound of the formula

$Y^3$ -$Ar^3$ -$Y^4$

and/or with a polyarylethersulphone having the repeating units

-Ph -$SO_2$ -Ph -

in which polyarylethersulphone the repeating units are linked by ether linkages

wherein

Ph is a phenylene group;

$Ar^1$ is a polyaromatic group containing at least two aromatic groups directly linked together;

$Ar^3$ is a group Ph or is a polyaromatic group containing at least two aromatic groups which are either directly linked together or are linked together by -CO -or -$SO_2$ -groups, wherein at least some of the groups $Ar^3$ contain a group -$SO_2$ -if the polymerisation mixture does not include at least some of the polyarylether sulphone;

$Y^1$, $Y^2$ and when present, $Y^3$ and $Y^4$ are each, independently, a halogen atom or a group -OH, and when $Y^3$ and/or $Y^4$ is a halogen atom, the group $Ar^3$ is such that the, or each, halogen atom is activated by an inert electron -withdrawing group in at least one of the positions ortho -or para -to the, or each, halogen atom; and

the proportions of the compound

$Y^1$ -Ph -CO -$Ar^1$ -CO -Ph -$Y^2$

and of the compound

$Y^3$ -$Ar^3$ -$Y^4$

are such, and the nature of $Y^1$, $Y^2$ and, when present, $Y^3$ and $Y^4$ is such, that the halogen atoms and the groups -OH are in substantially equimolar amounts.

10. A process as claimed in claim 9 wherein the at least one compound of the formula

$Y^1$ -Ph -CO -$Ar^1$ -CO -Ph -$Y^2$

is

bis -4,4'-(4-chlorobenzoyl) biphenyl;

bis -4,4'-(4-fluorobenzoyl) biphenyl;

bis -4,4'-(4 -hydroxybenzoyl) biphenyl; or

4-(4-hydroxybenzoyl)-4'-(4 fluorobenzoyl) biphenyl.

11. A process as claimed in claim 9 or claim 10 wherein the at least one compound of the formula

$Y^3$ -$Ar^3$ -$Y^4$

is

hydroquinone;

4,4'-dihydroxybiphenyl;

4,4'-dihydroxybenzophenone;

4,4'-difluorobenzophenone;

4,4'-dichlorodiphenylsulphone;

4,4'-dihydroxydiphenylsulphone;

bis-1,4-(4-fluorobenzoyl) benzene;

bis-1,4-(4-chlorobenzoyl) benzene;

bis-1,4-(4-hydroxybenzoyl) benzene;

bis-1,4-(4-chlorophenylsulphonyl) benzene;

bis-4,4'-(4-chlorophenylsulphonyl) biphenyl;

1-(4-chlorophenylsulphonyl)-4-(4-fluorobenzoyl) benzene;

4-(4-chlorophenylsulphonyl) phenol; or

4-(4-fluorobenzoyl) phenol.

12. A process as claimed in any one of claims 9 to 11 wherein

bis-4,4'-(4-chlorobenzoyl) biphenyl or

bis-4,4'-(4-fluorobenzoyl) biphenyl is polycondensed with 4,4'-dihydroxydiphenylsulphone

alone or together with at least one bisphenol which is hydroquinone

4,4'-dihydroxybiphenyl; or

4,4'-dihydroxybenzophenone.

13. A process as claimed in any one of claims 9 to 12 wherein polycondensation is effected in the presence of an inert solvent which is an aliphatic or aromatic sulphoxide or sulphone of the formula

R -S $(O)_a$ -R'

or N,N-dimethylformamide or N-methyl -2 -pyrrolidone

where

a is 1 or 2; and

R and R', which may be the same or different, are alkyl or aryl groups, and may together form a divalent radical.

14. A process as claimed in any one of claims 9 to 13 which is effected in the presence of at least one base which is an alkali metal hydroxide, carbonate or bicarbonate.

15. A process as claimed in any one of claims 9 to 14 wherein the base is used in at least the stoichiometric proportion with respect to the phenolic groups in the compounds

$Y^1$ -Ph -CO -$Ar^1$ -CO -Ph -$Y^2$

and/or

$Y^3$ -$Ar^3$ -$Y^4$

16. A process as claimed in any one of claims 9 to 15 which is effected in the presence of a mixture of sodium carbonate and the carbonate of a different alkali metal having a higher atomic number than sodium where the molar proportion of the different alkali metal is from 1.5 up to 15% molar of the total alkali metal.

Claims for contracting state : AT

1. A process for the preparation of a polyarylether which

comprises polycondensing, under substantially anhydrous conditions, in the presence of a base, at least one compound of the formula

$Y^1$ -Ph -CO -$Ar^1$ -CO -Ph -$Y^2$

with at least one compound of the formula

$Y^3$ -$Ar^3$ -$Y^4$

and/or with a polyaryethersulphone having the repeating units

-Ph -$SO_2$ -Ph -

in which polyarylethersulphone the repeating units are linked by ether linkages,

wherein

Ph is a phenylene group;

$Ar^1$ is a polyaromatic group containing at least two aromatic groups directly linked together;

$Ar^3$ is a group Ph or is a polyaromatic group containing at least two aromatic groups which are either directly linked together or are linked together by -CO -or -$SO_2$ -groups, wherein at least some of the groups $Ar^3$ contain a group -$SO_2$ -if the polymerisation mixture does not include at least some of the polyarylethersulphone;

$Y^1$, $Y^2$, and, when present, $Y^3$ and $Y^4$ are each, independently, a halogen atom or a group -OH, and when $Y^3$ and/or $Y^4$ is a halogen atom, the group $Ar^3$ is such that the, or each, halogen atom is activated by an inert electron -withdrawing group in at least one of the positions ortho -or para -to the, or each, halogen atom; and

the proportions of the compound

$Y^1$ -Ph -CO -$Ar^1$ -CO -Ph -$Y^2$

and of the compound

$Y^3$ -$Ar^3$ -$Y^4$

are such, and the nature of $Y^1$, $Y^2$, and, when present, $Y^3$ and $Y^4$ is such, that the halogen atoms and the groups -OH are in substantially equimolar amounts.

2. A process as claimed in claim 1 wherein an excess of up to 5% mole of either halogen or -OH groups is used.

3. A process as claimed claim 1 or claim 2 wherein the at least one compound of the formula

$Y^1$ -Ph -CO -$Ar^1$ -CO -Ph -$Y^2$

is

bis -4,4'-(4-chlorobenzoyl) biphenyl;

bis -4,4'-(4-fluorobenzoyl) biphenyl;

bis -4,4'-(4 -hydroxybenzoyl) biphenyl; or

4-(4-hydroxybenzoyl)-4'-(4 fluorobenzoyl) biphenyl.

4. A process as claimed in any one of claims 1 to 3 wherein the at least one compound of the formula

$Y^3$ -$Ar^3$ -$Y^4$

is

hydroquinone;

4,4'-dihydroxybiphenyl;

4,4'-dihydroxybenzophenone;

4,4'-difluorobenzophenone;

4,4'-dichlorodiphenylsulphone;

4,4'-dihydroxydiphenylsulphone;

bis-1,4-(4-fluorobenzoyl) benzene;

bis-1,4-(4-chlorobenzoyl) benzene;

bis-1,4-(4-hydroxybenzoyl) benzene;

bis-1,4-(4-chlorophenylsulphonyl) benzene;

bis-4,4'-(4-chlorophenylsulphonyl) biphenyl;

1-(4-chlorophenylsulphonyl)-4-(4-fluorobenzoyl) benzene;

4-(4-chlorophenylsulphonyl) phenol; or

4-(4-fluorobenzoyl) phenol.

5. A process as claimed in any one of claims 1 to 4 wherein

bis-4,4'-(4-chlorobenzoyl) biphenyl or

bis-4,4'-(4-fluorobenzoyl) biphenyl is polycondensed with 4,4'-dihydroxydiphenylsulphone

alone or together with at least one bisphenol which is hydroquinone

4,4'-dihydroxybiphenyl; or

4,4'-dihydroxybenzophenone.

6. A process as claimed in any one of claims 1 to 5 wherein polycondensation is effected in the presence of an inert solvent which is an aliphatic or aromatic sulphoxide or sulphone of the formula

R -S $(O)_a$ -R'

or N,N-dimethylformamide or N-methyl -2 -pyrrolidone

where

a is 1 or 2; and

R and R', which may be the same or different, are alkyl or

aryl groups, and may together form a divalent radical.

7. A process as claimed in claim 6 wherein the solvent is an aromatic solvent of the formula

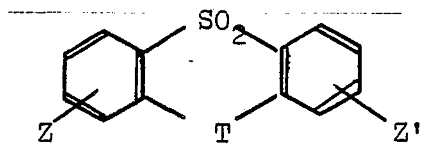

where

T is a direct link, an oxygen atom or two hydrogen atoms - (one attached to each benzene ring); and

Z, and Z', which may be the same or different, are hydrogen atoms, alkyl, alkaryl, aralkyl or aryl groups.

8. A process as claimed in any one of claims 1 to 7 which is effected in the presence of at least one base which is an alkali metal hydroxide, carbonate or bicarbonate.

9. A process as claimed in any one of claims 1 to 8 wherein the base is used in at least the stoichiometric proportion with respect to the phenolic groups in the compounds

$Y^1$ -Ph -CO -$Ar^1$ -CO -Ph -$Y^2$

and/or

$Y^3$ -$Ar^3$ -$Y^4$

10. A process as claimed in any one of claims 1 to 9 which is effected in the presence of a mixture of sodium carbonate and the carbonate of a different alkali metal having a higher atomic number than sodium where the molar proportion of the different alkali metal is from 1.5 up to 15% molar of the total alkali metal.

11. A polymer composition comprising a polyarylether which is the product of the process of any one of claims 1 to 10 together with at least one additive which is selected from a different polymeric material; inorganic and organic fibrous fillers; organic and inorganic fillers; nucleating agents; stabilisers; and nucleophilic reagents.

12. A process for the production of a polymer composition wherein essentially continuous fibre is passed into contact with a molten material which is a molten polyarylether or a molten mixture containing a polyarylether wherein the polyarylether is the product of the process of any one of claims 1 to 10.